# EUROPEAN PATENT APPLICATION

(11) **EP 4 391 593 A1**
(43) Date of publication of application: **26.06.2024**
(21) Application number: 22214688.8
(22) Date of filing: 19.12.2022
(51) Int. Cl.: H04W 4/02, H04N 21/414, H04W 4/40, H04W 4/80

(54) **ELECTRONIC DEVICE AND METHOD OF OPERATING AN ELECTRONIC DEVICE**

(71) Applicant: Vestel Elektronik Sanayi ve Ticaret A.S., 45030 Manisa (TR)
(72) Inventor: Aygül, Mehmet Ali, 45030 Manisa (TR); Kirisken, Barbaros, 45030 Manisa (TR)
(74) Representative: Page White Farrer

(57) **Abstract**

An electronic device (200) for wirelessly pairing with an audio playback device (300) within an environment (100) to wirelessly transmit audio data to the paired audio playback device (300) is provided. The electronic device comprises a wireless interface (220) for wirelessly transmitting audio data to a paired audio playback device (300). The electronic device (200) is configured to identify a nearest audio playback device (300) of a plurality of audio playback devices (300) within the environment (100), the nearest audio playback device (300) being a physically closest one of the audio playback devices (300) within the environment (100) to the electronic device (200). The electronic device (200) is configured to pair with the identified nearest audio playback device (300) for transmitting of audio data to the nearest audio playback device (300) using the wireless interface (220). A corresponding method and computer program are also provided.

## Description

### Technical Field

The present disclosure relates to an electronic device, a method of operating an electronic device, and a corresponding computer program.

### Background

Wireless communication technologies allow electronic devices to wirelessly transmit data to other electronic devices within range (which can depend on the particular wireless communication technology). Bluetooth is an example of such a wireless communication technology. Among other things, Bluetooth allows one device to send audio data to a remote audio playback device. For example, a user may "pair" a wireless headset with their smartphone, which allows the smartphone to send audio data to the wireless headset via the Bluetooth connection.

### Summary

According to a first aspect disclosed herein, there is provided an electronic device for wirelessly pairing with an audio playback device within an environment to wirelessly transmit audio data to the paired audio playback device, the electronic device comprising:
a wireless interface for wirelessly transmitting audio data to a paired audio playback device;
wherein the electronic device is configured to:
   identify a nearest audio playback device of a plurality of audio playback devices within the environment, said nearest audio playback device being a physically closest one of said audio playback devices within the environment to the electronic device; and
   pair with the identified nearest audio playback device for transmitting of audio data to said nearest audio playback device using the wireless interface.

In an example, the electronic device is configured to identify the nearest audio playback device by determining a respective physical distance between the electronic device and each audio playback device within the environment.

In an example, the electronic device is configured to pair with the identified nearest audio playback device only if the determined respective distance to the nearest audio playback device is below a threshold distance.

In an example, the threshold distance is configurable by a user.

In an example, the electronic device is configured to perform said identification of the nearest audio playback device periodically.

In an example, the electronic device is configured to perform said identification of the nearest audio playback device in response to identifying presence of a new audio playback device.

In an example, the electronic device is configured to determine the respective physical distances using at least one of: Bluetooth Low Energy, BLE, and Bluetooth Ultra-Wide Band, UWB.

In an example, the electronic device comprises a display screen for displaying graphic content.

In an example, the electronic device is configured to determine a respective location of each audio playback device within the environment, and the electronic device is configured to identify the nearest audio playback device based on the nearest audio playback device being a physically closest one of said audio playback devices within the environment to the electronic device that are in front of the display screen.

According to a second aspect disclosed herein, there is provided a method performed by an electronic device for wirelessly pairing with an audio playback device within an environment to wirelessly transmit audio data to the paired audio playback device, the electronic device having a wireless interface for wirelessly transmitting audio data a paired audio playback device; the method comprising:
identifying a nearest audio playback device of a plurality of audio playback devices within the environment, said nearest audio playback device being a physically closest one of said audio playback devices within the environment to the electronic device; and
pairing with the identified nearest audio playback device for transmitting of audio data to the nearest audio playback device using the wireless interface.

In an example, the method comprises determining a respective physical distance between the electronic device and each audio playback device within the environment, wherein said identifying the nearest audio playback device is performed based on said determining. The respective physical distances may be determined using known techniques including, but not limited to: time difference of arrival, time of transmission, time of flight of the signal.

In an example, identifying of the nearest audio playback device is performed periodically.

In an example, the method comprises identifying of the nearest audio playback device is performed in response to identifying presence of a new audio playback device.

According to a third aspect disclosed herein, there is provided a computer program comprising instructions such that when the computer program is executed on an electronic device, the electronic device is arranged to carry out a method according to the second aspect or any example thereof.

In examples, the environment is the interior of a vehicle.

### Brief Description of the Drawings

To assist understanding of the present disclosure and to show how embodiments may be put into effect, reference is made by way of example to the accompanying drawings in which:
Figure 1 shows schematically a plurality of electronic devices and a plurality of audio playback devices disposed within an environment;
Figure 2 shows schematically an example of an electronic device in accordance with examples described herein; and
Figure 3 shows schematically an example method performed by the electronic device in accordance with examples disclosed herein.

### Detailed Description

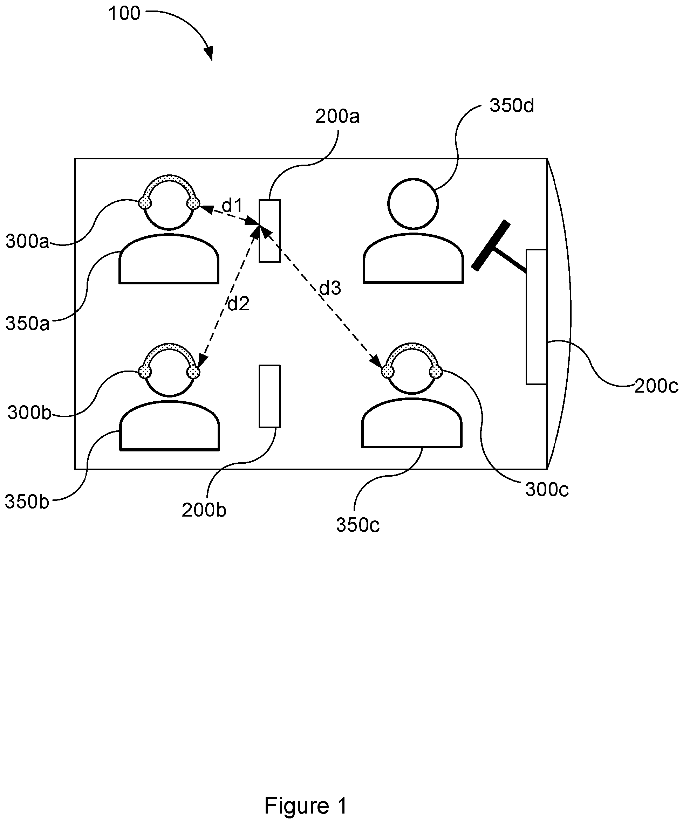

Figure 1 shows schematically a plurality of electronic devices 200 and a plurality of audio playback devices 300 disposed within an environment 100. The environment 100 may be, for example, the interior of a road vehicle, such as for example a car (as illustrated in Figure 1), lorry, bus, coach, etc., the interior of another type of vehicle (aeroplane, train, etc.), the interior of a building (a shop, a museum, etc.), an outdoor space, etc.

A plurality of users 350 are also shown within the environment 100. For the purposes of illustration, in Figure 1 there are four users 350: the fourth user 350d is the driver of the car; the third user 350c is the front-seat passenger; the second user 350b is seated behind the third user 350c; and the first user 350a is seated behind the fourth user 350d (driver). It is appreciated that more or fewer users 350 may be present in other examples, which may depend on the particular type of environment 100, and the users 350 may be arranged and located in a different manner.

In this example, there are three audio playback devices 300a-c. It is appreciated that in general any number of audio playback devices 300 may be present. The audio playback devices 300 are illustrated in Figure 1 as wireless headsets which are associated with (worn by) different users 350. In this example, a first audio playback device 300a is worn by the first user 350a, a second audio playback device 300b is worn by the second user 350b, and a third audio playback device 300c is worn by the third user 350c. The fourth user 350d, the driver, is not wearing a wireless headset. Other examples of audio playback devices 300 include wireless ("in-ear") earphones or "ear buds". In general, the concepts described herein apply in relation to any audio playback device that provides "personal" audio (that the wearer can hear but other people cannot hear, or can only hear at a substantially reduced loudness).

In this example, there are three electronic devices 200a-c. It is appreciated that in general any number of electronic devices 200 may be present. The number of audio playback devices 300 may be different from the number of electronic devices 200. In any event, the audio playback devices 300 are "remote" from the electronic devices 200 in the sense that the audio playback devices 300 are physically separate from the electronic devices 200 (in particular, not connected by any wired data or power connection).

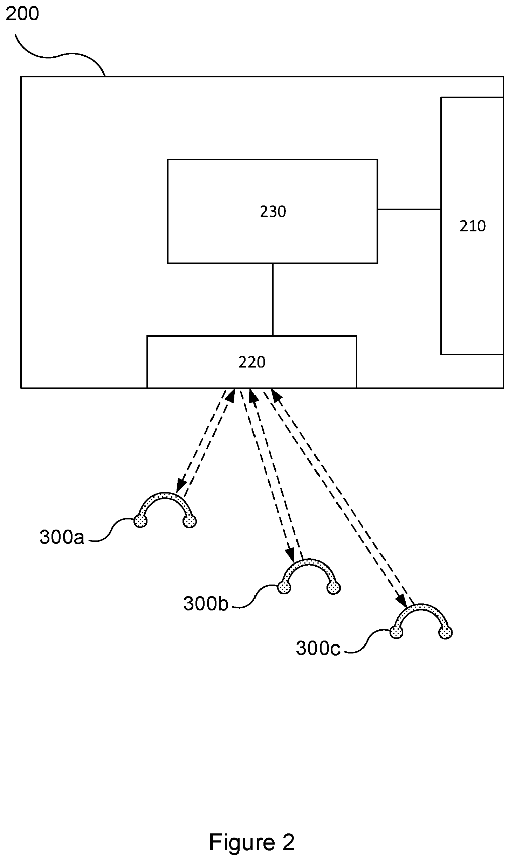

Figure 2 shows schematically an example of one of the electronic devices 200 in accordance with examples described herein. The other electronic devices 200 may have substantially similar construction.

The electronic device 200 of this example comprises a display screen 210, a wireless interface 220, and a processor 230. The processor 230 is operatively coupled to the display screen 210 and the wireless interface 220.

The wireless interface 220 is for wirelessly connecting the electronic device 200 to the audio playback devices 300. In particular, as will be described below, the electronic device 200 is configured to "pair" with one of the audio playback devices 300 for sending audio content to that paired audio playback device 300.

As generally known in the art, the term "pairing" refers to two electronic devices exchanging information in order to establish a communication channel by which the two electronic devices can send and receive data to and from each other. Audio or other data output by a sending electronic device is only decoded by another electronic device which is "paired" with the sending electronic device, and not by other non-paired electronic devices.

The exchanged information may include, for example, an identifier of each electronic device. Electronic keys or passwords or the like may be exchanged as part of the pairing process. Each electronic device stores this information to an internal memory. Once each device has the information stored, the devices are said to be "paired". Similarly, the devices may be "unpaired" at a later point in time, which includes the deletion of the information.

The display screen 210 is for displaying graphic content to the users 350. Examples of suitable display screens include LCD, LED, OLED, AMOLED devices, as known in the art. This way, the electronic device 300 provides a display screen within the environment 100 for displaying graphic content (e.g. pictures, video, game content, etc., obtained from a local source such as local data storage, a DVD player, a local computer games console or device, etc., and/or from a remote source, e.g. via a wireless connection). In terms of a car interior environment 100 of this example, the first electronic device 200a may be referred to as the left-side backseat screen, the second electronic device 200b may be referred to as the right-side backseat screen, and the third electronic device 200c may be referred to as the front centre console screen.

The displayed graphic content may be associated with respective audio content. If each electronic device 200 is displaying the same graphic content (or is inactive), then it may be suitable to output the associated audio content via a loudspeaker system within the environment 100, which allows all of the users 350 to hear the same audio content.

On the other hand, if one or more of the electronic devices 200 is displaying different graphic content or generating different audio content, this would not be appropriate. Instead, the individual audio content of the different electronic devices 200 can be sent to different respective audio playback devices 300, so that each user 350 hears different audio. In these cases, it is important to ensure that the correct audio is sent to each audio playback device 300. In particular, it is important to ensure that the audio content generated by a given electronic device 200 is sent to the audio playback device 300 associated with the user 350 who is viewing the display screen 210 of that electronic device 200.

In the context of the interior of a vehicle, for example, there are often multiple electronic devices 200 with display screens, and it is possible for each electronic device 200 to provide different (audio and/or graphic) content on the respective display screens. At any given moment, the content provided by one electronic device 200 may be different from that provided by one or more others of the electronic devices 200. This is especially the case for "infotainment" screens, which are the back seat screens (provided by the first electronic device 200a and second electronic device 200b in Figure 1). For example, various music streaming and video on demand (VoD) applications can be played on the infotainment screens. In such cases, different audio content needs to be provided to each user 350, depending on which graphic content they are watching (i.e. which electronic device 200 they are viewing).

The present disclosure addresses this problem by configuring each electronic device 200 to automatically pair with the audio playback device 300 which is physically closest to that electronic device 200. In Figure 1, for example, the electronic device 200a would automatically pair with the audio playback device 300a associated with the first user 350a, as this is the closest of the three audio playback devices 300. This avoids the need for the audio playback device 300 pairing to be manually selected, and is thereby faster and easier for the user.

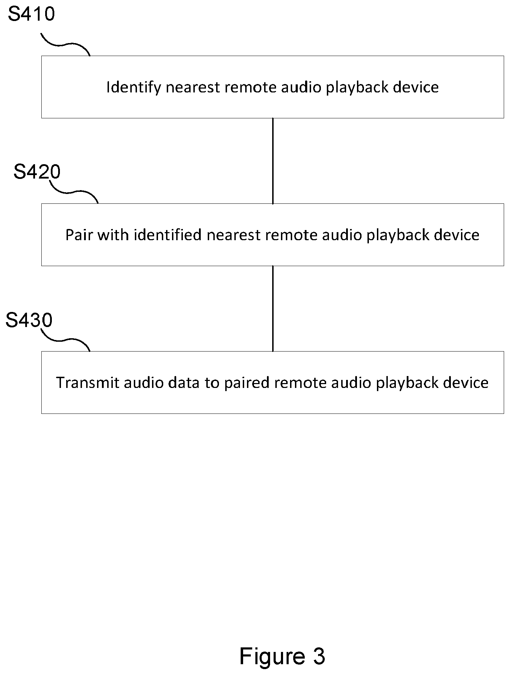

Figure 3 shows schematically a method performed by the electronic device 200 according to examples described herein.

At S410, the electronic device 200 identifies a nearest audio playback device 300. The nearest audio playback device 300 is the one of the audio playback devices 300 within the environment 100 which is physically closest to the electronic device 200. The method then proceeds to S420.

At S420, the electronic device 200 pairs with the identified nearest audio playback device 300. As mentioned earlier, this comprises the electronic device 200 and nearest audio playback device 300 exchanging and storing information establishing a communication channel between them. Pairing with the nearest audio playback device 300 means that audio data generated at the electronic device 200 will be transmitted to the nearest audio playback device 300 using the wireless interface 220 (at least for the duration of the pairing). The method then proceeds to S430.

Note that if the electronic device 200 is already paired with another audio playback device 300 which is different from the nearest audio playback device 300 determined at S420, this step may comprise the electronic device 200 unpairing from the other audio playback device 300. For example, the electronic device 200 may unpair from the other audio playback device 300 in response to the distance to that other audio playback device being over a threshold (an "unpairing" threshold, which may or may not be the same as the "pairing" threshold used to trigger pairing). Alternatively or additionally, the electronic device 200 may unpair from the other audio playback device 300 after a predetermined amount of (inactive) time, which may be configurable by the user. Alternatively or additionally, the electronic device 200 may unpair from the other audio playback device 300 in response to determining that a different audio playback device is closer to the electronic device 200.

At S430, the electronic device 200 transmits audio data to the paired audio playback device 300 using the communication channel established by the pairing. This may also be referred to as "streaming" of audio data to the paired audio playback device 300.

The identification of the nearest audio playback device 300 at S410 may be performed periodically, e.g. once every second, one every minute, etc. The time period between each instance of identifying the nearest remote audio playback device 300 may be configurable by a user.

Alternatively or additionally, the identification of the nearest audio playback device 300 at S410 may be performed in response to identifying presence of a new audio playback device.

In some examples, the identification of the nearest audio playback device 300 at S410 may be performed by determining (measuring) a respective physical distance between the electronic device 200 and each audio playback device 300 within the environment 100.

The distance determination may be performed using one or more of a number of techniques. For example, the electronic device 200 may output (broadcast) one or more "beacon" signals for reception by the audio playback devices 300. The audio playback devices 200 are arranged to operate such that in response to receiving such a beacon signal, the audio playback devices 300 (i.e. any which receive the signal) send a response signal to the electronic device 200. The one or more response signals received by the electronic device 200 allow the electronic device 200 to determine a respective distance to each audio playback device 300. This can be done based on e.g. one or more of received signal strength (RSSI) and time-of-flight (ToF), also known as "two-way ranging" (TWR) in which the distance between a transmitter and a receiver is calculated based on how long it takes for pulses of the radio signals to travel from one device to the other. In examples, multiple beacon signals can be used to improve the accuracy of the distance measurement. For example, communication between the electronic devices 200 can allow for triangulation using known techniques, thereby improving the accuracy of the distance estimates. Note that this is optional, and that a single beacon is sufficient.

An example of a beacon signal which may be used is a Bluetooth Low Energy (BLE) beacon, which are transmitted by "Bluetooth beacons", which are a class of Bluetooth Low Energy devices that broadcast their identifier to nearby portable electronic devices. Other types of beacon signal may be used.

In examples, ultra-wideband, UWB, wireless communication may be used in the distance determination. As known per se, UWB is a short-range wireless communication protocol which uses high frequencies (such as between 3.1 to 10.6 GHz) across a wide frequency spectrum (at least 500 MHz or 20% of the centre frequency). Unlike most traditional radio signals, UWB does not use power, frequency or phase modulation to encode the information that is carried by the wireless signals. Instead, UWB uses frequent pulses at specific time intervals (typically every couple of nanoseconds) to carry the information. This allows transmission across a wide bandwidth while avoiding interference with other radio signals in the same spectrum.

In examples, the electronic device 200 may measure the respective distances to the audio playback devices 300 using UWB communications. ToF techniques, mentioned above, can be used with UWB communications to determine distance between the devices typically with an accuracy of less than 50 centimetres, and even less than around 10 centimetres. Further, the latency to obtain a distance measurement using ToF and UWB can be less than 1 ms. Therefore, ToF with UWB enables sensitive and accurate location particularly if one of the devices is moving.

Note that, while the distance between the electronic device 200 and one or more audio playback devices 300 may be measured with the BLE beacon radio and/or UWB communications, the sound transfer continues with for example the Bluetooth Classic radio wireless protocol at S430.

In some examples, the pairing at S420 may be performed only if the determined respective distance to the nearest audio playback device 300 is below a threshold distance. The threshold distance may be configurable by a user 350.

In examples, it may not be necessary for the electronic device 200 to determine any actual physical distances.

In a first example, the identification of the nearest audio playback device 300 at S410 may be performed on the basis of identifying that only one audio playback device 300 is present within the environment 100 (that audio playback device 300 then being considered to be the nearest one).

In a second example, the electronic device 200 0 may determine the nearest audio playback device 200 on the basis of that audio playback device 200 being the first one to provide a return signal (i.e. the first to respond to a beacon signal), assuming processing, etc. delays in the playback devices 200 are the same. Note that this does not necessarily require the electronic device 200 to determine the actual physical distance to any of the audio playback devices 300.

In yet further examples, localization techniques may be used to determine a respective position of the audio playback devices 300 within the environment 100 (in contrast to earlier examples in which only a determination of the nearest audio playback device 300 is required, may or may not involve the determination of a position as such). The respective positions can then be used to determine the nearest audio playback device 300 to a given electronic device 200. Advantageously, these examples allow an audio playback device 300 to be excluded from pairing on the basis of its position (e.g. angle) relative to the electronic device 200. In particular, if the electronic device 200 comprises a display screen 210, any audio playback devices 300 located behind the display screen 210 will be excluded. That is, the electronic device 200 still determines the nearest audio playback device 300, but only from among any audio playback devices located in front of the display screen 210.

Examples of such localization techniques are known in the art. For example, Pandey, S., & Agrawal, P. (2006) (A survey on localization techniques for wireless networks. Journal of the Chinese Institute of Engineers, 29(7), 1125-1148) describe various techniques which allow for positions of electronic devices to be determined with varying accuracy. Triangulation-based techniques are particularly suitable for use with the present disclosure. For example, if there are multiple electronic devices 200a-c present within the environment 100 (as in the example described earlier) then, as mentioned earlier, triangulation-based localization of the audio playback device 300 can be performed using communication between the electronic devices 200.

It will be understood that the processor or processing system or circuitry referred to herein may in practice be provided by a single chip or integrated circuit or plural chips or integrated circuits, optionally provided as a chipset, an applicationspecific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solidstate drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solidstate drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An electronic device (200) for wirelessly pairing with an audio playback device (300) within an environment (100) to wirelessly transmit audio data to the paired audio playback device (300), the electronic device comprising:
a wireless interface (220) for wirelessly transmitting audio data to a paired audio playback device (300);
wherein the electronic device (200) is configured to:
identify a nearest audio playback device (300) of a plurality of audio playback devices (300) within the environment (100), said nearest audio playback device (300) being a physically closest one of said audio playback devices (300) within the environment (100) to the electronic device (200); and
pair with the identified nearest audio playback device (300) for transmitting of audio data to said nearest audio playback device (300) using the wireless interface (220).

2. An electronic device (200) according to claim 1, wherein the electronic device (200) is configured to identify the nearest audio playback device (300) by determining a respective physical distance between the electronic device (200) and each audio playback device (300) within the environment (100).

3. An electronic device (200) according to claim 2, wherein the electronic device (200) is configured to pair with the identified nearest audio playback device (300) only if the determined respective distance to the nearest audio playback device (300) is below a threshold distance.

4. An electronic device (200) according to claim 3, wherein the threshold distance is configurable by a user (350).

5. An electronic device (200) according to any of claims 2 to 4, wherein the electronic device (200) is configured to determine the respective physical distances using at least one of: Bluetooth Low Energy, BLE, and Bluetooth Ultra-Wide Band, UWB.

6. An electronic device (200) according to any of claims 1 to 5, wherein the electronic device (200) is configured to perform said identification of the nearest audio playback device (300) periodically.

7. An electronic device (200) according to any of claims 1 to 6, wherein the electronic device (200) is configured to perform said identification of the nearest audio playback device (300) in response to identifying presence of a new audio playback device.

8. An electronic device (200) according to any of claims 1 to 7, comprising a display screen (210) for displaying graphic content.

9. An electronic device (200) according to claim 8, wherein the electronic device (200) is configured to determine a respective location of each audio playback device (300) within the environment (100), and wherein the electronic device (200) is configured to identify the nearest audio playback device (300) based on the nearest audio playback device (300) being a physically closest one of said audio playback devices (300) within the environment (100) to the electronic device (200) that are in front of the display screen (210).

10. A method performed by an electronic device (200) for wirelessly pairing with an audio playback device (300) within an environment (100) to wirelessly transmit audio data to the paired audio playback device (300), the electronic device (200) having a wireless interface (220) for wirelessly transmitting audio data a paired audio playback device (300); the method comprising:
identifying (S410) a nearest audio playback device (300) of a plurality of audio playback devices (300) within the environment (100), said nearest audio playback device (300) being a physically closest one of said audio playback devices (300) within the environment (100) to the electronic device (200); and
pairing (S420) with the identified nearest audio playback device (300) for transmitting of audio data to the nearest audio playback device (300) using the wireless interface (220).

11. A method according to claim 10, comprising determining a respective physical distance between the electronic device (200) and each audio playback device (300) within the environment (100), wherein said identifying (S410) the nearest audio playback device (300) is performed based on said determining.

12. A method according to claim 10 or claim 11, wherein said identifying (S410) of the nearest audio playback device (300) is performed periodically.

13. A method according to claim 10 or claim 12, wherein said identifying (S410) of the nearest audio playback device (300) is performed in response to identifying presence of a new audio playback device.

14. A computer program comprising instructions such that when the computer program is executed on an electronic device, the electronic device is arranged to carry out a method according to any of claims 10 to 13.

15. An electronic device (200) according to any of claims 1 to 9 or a method according to any of claims 10 to 13, wherein the environment (100) is the interior of a vehicle.
